# EUROPEAN PATENT SPECIFICATION

(11) **EP 3 452 341 B1**
(45) Date of publication and mention of the grant of the patent: **06.05.2020**
(21) Application number: 16719870.4
(22) Date of filing: 02.05.2016
(51) Int. Cl.: B60S 1/40

(54) **VEHICLE PROVIDED WITH AT LEAST TWO WINDSCREEN WIPER DEVICES OF THE FLAT BLADE TYPE**
FAHRZEUG MIT MINDESTENS ZWEI SCHEIBENWISCHVORRICHTUNGEN MIT FLACHEM BLATT
VÉHICULE DOTÉ D'AU MOINS DEUX DISPOSITIFS D'ESSUIE-GLACE DU TYPE À BALAI PLAT

(43) Date of publication of application: 13.03.2019
(73) Proprietor: Federal-Mogul S.A., 6790 Aubange (BE)
(72) Inventor: SEILLER, Guillaume, 68150 Ribeauville (FR)
(74) Representative: Hooiveld, Arjen Jan Winfried
(86) International application number: PCT/EP2016/059771
(87) International publication number: WO 2017/190762

(56) References cited:
- EP-A1- 1 681 216
- WO-A1-2013/170877

## Description

The present invention relates to a vehicle provided with at least two windscreen wiper devices of the flat blade type each comprising an elastic, elongated carrier element, as well as an elongated wiper blade of a flexible material, which can be placed in abutment with a windscreen of the vehicle to be wiped, each wiper blade including at least one groove, in which groove a longitudinal strip of the carrier element is disposed, which windscreen wiper devices each comprise a connecting device for a respective oscillating arm, wherein each oscillating arm is pivotally connected to its corresponding connecting device about a pivot axis near one end.

Particularly, said wiper blade comprises a spoiler at a side thereof facing away from the windscreen to be wiped, wherein said wiper blade and said spoiler are preferably made in one piece through extrusion. Said longitudinal groove is preferably a central longitudinal groove accommodating said longitudinal strip. Said longitudinal strip is also called a "flexor", while said connecting device is also indicated as a "connector".

Such a vehicle with two windscreen wiper devices is generally known. This prior art windscreen wiper device is designed as a "yokeless" wiper device or "flat blade", wherein no use is made of several yokes pivotally connected to each other, but wherein the wiper blade is biased by the carrier element, as a result of which it exhibits a specific curvature.

Such a known vehicle is often equipped with a so-called "tandem" wiper arrangement on the front side thereof. In the latter case the wiper blades on the driver's side and passenger's side may mutually differ as far as their length and/or the curvature of the carrier element (that is the longitudinal strips or "flexors") is concerned. In the latter case a reverse mounting of both blades would then result in a situation, wherein the wiper blade on the drivers side is pressed too much on the windscreen to be wiped and the wiper blade on the passengers side is pressed too little on the windscreen to be wiped, or vice versa. Such a situation is of course undesirable, as the wiping qualities would then be seriously affected.

In such arrangement two oscillating arms are each pivotally connected to a mounting head fixed for rotation to a shaft driven by a small motor, wherein in use the one shaft rotates alternately in a counterclockwise and in a clockwise sense (this shaft corresponds to the oscillating arm at the drivers side of the vehicle), whereas the other shaft simultaneously rotates in the same sense (this shaft corresponds to the oscillating arm at the passengers side of the vehicle). In use both shafts carry the mounting heads into rotation also, which in turn draw the oscillating arms into rotation and by means of the connecting devices move the wiper blades accordingly. In practice it has become apparent that, during replacement of windscreen wiper devices used in a vehicle with the above-described "tandem" wiper arrangement, such a windscreen wiper device meant to be mounted on the oscillating arm at the drivers side of the vehicle is actually mounted on the oscillating arm at the passengers side of the vehicle, while such a windscreen wiper device meant to be mounted on the oscillating arm at the passenger side of the vehicle is actually mounted on the oscillating arm at the drivers side of the vehicle. Particularly such a reversed mounting results in that the curvature and the length of the wiper blade do not match, so that said mounting seriously affects the wiping qualities thereof particularly at high speeds, with all negative consequences involved. WO 2013/170.877 discloses a vehicle according to the preamble of claim 1.

The object of the invention is to provide a vehicle, particularly an automobile, with a windscreen wiper device of the "yokeless blade" type having a spoiler (or "air-deflector"), wherein it is no longer possible to mount a windscreen wiper device meant for the oscillating arm at the passenger side of the automobile on the oscillating arm at the drivers side of the automobile, and vive versa (that is to mount a windscreen wiper device meant for the oscillating arm at the drivers side of the automobile on the oscillating arm at the passengers side of the automobile).
In order to accomplish that objective, a vehicle of the type referred to in the introduction is characterized according to the invention in that each connecting device comprises at least two parts provided with protrusion/hole means arranged for connecting said parts together through a snapping operation, wherein the first part is retained onto its corresponding wiper blade and wherein the second part comprises a channel arranged for inserting a rod-like extension of its corresponding oscillating arm therein, and wherein each second part and said extension of its corresponding oscillating arm comprise mutually cooperating protuberance/groove means resulting in an asymmetric form of said second part and of said extension of said oscillating arm with respect to their middle longitudinal planes, seen in vertical direction, in order to ensure that each windscreen wiper device can only be mounted on its corresponding oscillating arm. In other words, due to the asymetric form of both the second part and its corresponding oscillating arm, it is prevented that the windscreen wiper device meant for the oscillating arm at the passenger side of the automobile can be mounted on the oscillating arm at the drivers side of the automobile, and that the windscreen wiper device meant for the oscillating arm at the drivers side of the automobile can be mounted on the oscillating arm at the passengers side of the automobile. By avoiding any such reverse mounting of these windscreen wiper devices and thus by mounting them in the right position, the wiping qualities will be guaranteed at all times.

Said first and second part are preferably detachably interconnected with the help of said protrusion/hole means.

In the framework of the present invention said first part and said second part of said connecting device are each preferably made in one piece of plastic.

Further, it is noted that the present invention is not restricted to the use of only one longitudinal strip that is particularly located in a central, channel forming groove of the wiper blade. Instead, said carrier element may comprise two, spaced-apart longitudinal strips forming the elastic, elongated carrier element, wherein said strips are disposed in opposing longitudinal grooves on longitudinal sides of the wiper blade. In the latter case said first part of said connecting device may welded, soldered, brazed or glued to the longitudinal strips. In the former case, said first part of said connecting device may be welded, soldered, brazed or glued to an elastomeric material, such as rubber, of the wiper blade.
In a preferred embodiment of a vehicle in accordance with the invention said extension is provided with a protuberance cooperating with a groove of said channel.

In another preferred embodiment of a vehicle according to the invention said channel and said extension each have a rectangular cross-section. Particularly, said protuberance extends upwardly from an upper surface of said extension, and wherein said groove extends in an upper wall of said channel. In the alternative, said protuberance extends downwardly from a bottom surface of said extension, and wherein said groove extends in a lower wall of said channel. In the alternative, said protuberance extends sideward from a side surface of said extension, and wherein said groove extends in a sidewall of said channel.

In another preferred embodiment of a vehicle in accordance with the invention each windscreen wiper device is provided with retaining means arranged for retaining said connecting device onto said extension of its corresponding oscillating arm , wherein said retaining means comprises at least one downwardly extending protrusion on the second part, wherein said protrusion is movable between an inward position, wherein in mounted position said protrusion engages into a correspondingly shaped hole provided in said extension of said oscillating arm and said connecting device is retained onto said oscillating arm, and an outward position, wherein in dismounted position said protrusion disengages from said hole provided in said extension of said oscillating arm and said connecting device is released from said oscillating arm. Particularly, upon activating a push button on said second part said protrusion is hingeable from said inward position and said outward position along hinges of said second part located on opposite sides of said extension of said oscillating arm in mounted position thereof. Such a push button can be pressed in by hand. More in particular, a part of a top wall of said second part containing said downwardly extending protrusion is allowed to hinge about a hinge upon activating or deactivating (particularly using a finger) said push button on said part of said top wall. Even more in particular, said part of said top wall comprises at a bottom side thereof said downwardly extending protrusion, as well as at a top side thereof said push button. By activating or deactivating the push button, a hinge movement or "seesaw movement" is realized. Said protrusion and said push button are preferably located at opposite ends of said part of said top wall of said second part.

In another preferred embodiment of a vehicle according to the invention said retaining means form first retaining means, wherein each windscreen wiper device further comprises second retaining means arranged for retaining said connecting device onto said extension of its corresponding oscillating arm, wherein said second retaining means comprises at least one protrusion provided on the first part arranged to engage into a recess provided along a longitudinal side of the extension of the oscillating arm. In the alternative, said protrusion on the first part is arranged to engage into a hole having a closed circumference provided in the oscillating arm. Preferably, said protrusion on the first part is located near an insertion opening of said channel arranged for inserting said oscillating arm therein. In other words, said recess provided on a longitudinal side of the oscillating arm is located at a larger distance to the free end of the oscillating arm than the hole in the oscillating arm cooperating with the protrusion on the second part. Accordingly, mounting or dismounting said connecting device onto or from said oscillating arm can be effected at a certain pivot angle of the oscillating arm relative to said first part.

The present invention also relates to a windscreen wiper device as defined in a vehicle in accordance with the invention.

The present invention also refers to an oscillating arm as defined in a vehicle according to the invention.

The invention will now be explained in more detail with reference to figures illustrated in a drawing, wherein
- Figure 1 is a schematic and perspective view/ partly in exploded view, of a main part of a windscreen wiper device and an oscillating arm according to the invention, wherein a first part and a second part of a connecting device of said windscreen wiper device is shown arranged to be connected to said oscillating arm;
- Figure 2 are side views of said oscillating arm inserted inside said second part of the connecting device of figure 1;
- Figure 3 corresponds to figure 2, but now showing schematic, perspective views;
- Figure 4 is a top view of figure 3;
- Figure 5 are cross-sectional views along the line A-A of figure 4;
- Figure 6 are schematic, perspective views of (a part of) the first part of said connector, as well as a view form below of said connector connected to said oscillating arm;
- Figure 7 shows successive steps for fitting together said connecting device and said oscillating arm according to the invention;

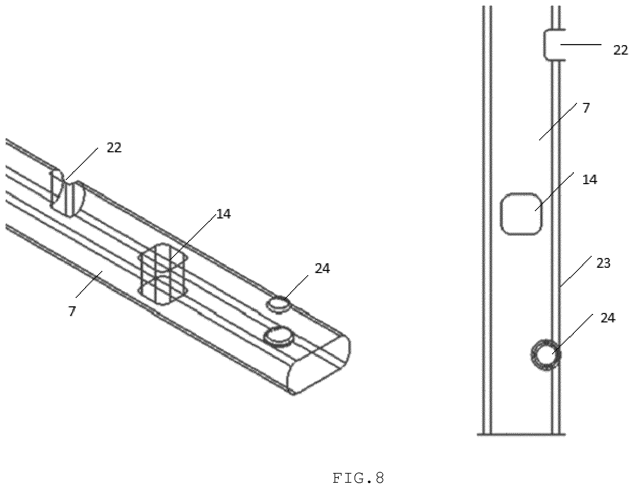

- Figure 8 shows a perspective view and a top view of said oscillating arm according to the invention; and
- Figure 9 is a schematic, perspective view of an extremity of said oscillating arm and of the second part.

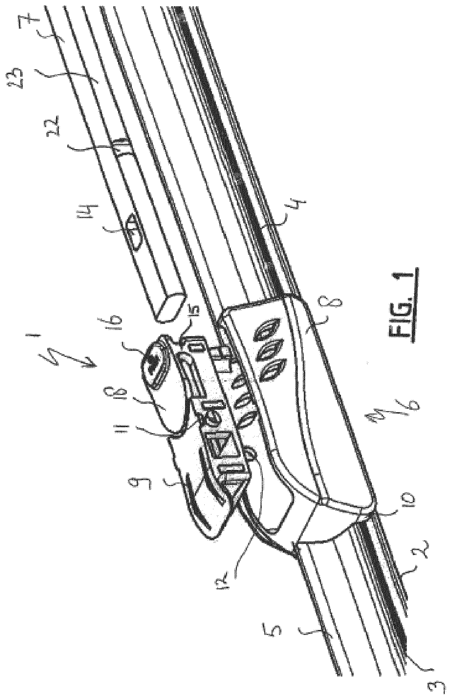

Figure 1 shows a windscreen wiper device 1 of the "flat blade" type according to the invention. Said windscreen wiper device 1 is built up of an elastomeric wiper blade 2, in the longitudinal sides of which opposing longitudinal grooves 3 are formed, and of longitudinal strips 4 made of spring band steel, which are fitted in said longitudinal grooves 3. Said strips 4 form a flexible carrier element for the rubber wiper blade 2, as it were, which is thus biased in a curved position (the curvature in operative position being that of a windscreen to be wiped). Neighbouring ends of strips 4 are interconnected on either side of the windscreen wiper device 1 by means of connecting pieces (not shown) functioning as clamping members. In this embodiment, the connecting pieces may be separate constructional elements, which may be form-locked ("positive locking" or "having positive fit"), as well as force-locked to the ends of strips 4. In another preferred variant, said connecting pieces are in one piece with the strips 4 made of spring band steel. In the latter case said connecting pieces form transverse bridges for the strips 4, as it were. Possibly, a spoiler 5 is furthermore provided.

The windscreen wiper device 1 is furthermore built up of a connecting device 6 of plastic material for an oscillating wiper arm 7. Said wiper arm 7 is finalized by an extension (without an adapter). Connecting device 6 consists of a first part 8 and a second part 9 detachably connected together. Said first part 8 is retained onto the wiper blade 2, whereas said second part 9 is positioned within said first part 8, that is between parallel, upright walls thereof. Further, said first part 8 comprises clamping members 10 that are integral therewith, which engage round longitudinal sides of the strips 4 that face away from each other, as a result of which the connecting device 6 is firmly attached to the unit consisting of wiper blade 2 and strips 4. Said second part 9 has a U-shaped cross-section at the location of its connection to said first part 8 . The oscillating wiper arm 7 is pivotally connected to the connecting device 6 about a pivot axis near a free end thereof, and that in the following manner.

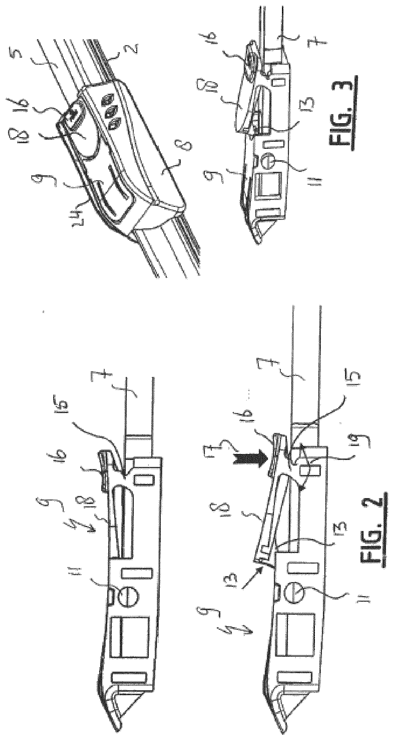

With reference to figures 1 and 2, said second part 9 comprises two cylindrical protrusions 11 (only one is visible) extending outwards on either side of said second part 9, that is on each vertical side wall of its U-shaped, rectangular or square cross-section. These protrusions 11 pivotally engage in identically shaped cylindrical holes 12 (only one thereof is visible in figures 1 and 2) of said first part 8. Said protrusions 11 act as bearing surfaces at the location of a pivot axis in order to pivot the second part 9 (and the oscillating wiper arm 7 attached thereto) about said pivot axis near a free end of said arm 7. The protrusions 11 are preferably in one piece with said second part 9. In the alternative, the protrusions 11 are part of a single pivot pin perpendicular to the connecting device 6.

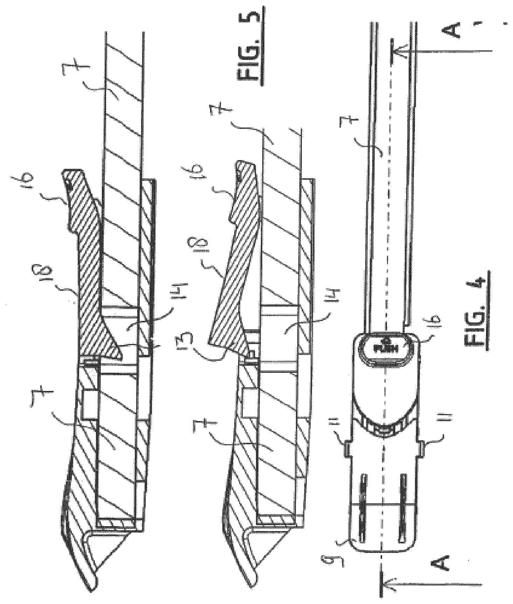

Referring to figures 1, 2, 3 and 5, the second part 9 comprises a protrusion 13 extending downwardly from a top wall of said second part 9, while the oscillating arm 7 has an identically shaped hole 14 with a closed circumference at the location of its connection to said second part 9. Said protrusion is hingeable between an inward position (figure 2 above and figure 5 above), wherein in a mounted position said protrusion 13 engages into said hole 14 provided in said oscillating arm 7 in order to retain said connecting device 6 onto said oscillating arm 7, and an outward position (figure 2 below and figure 5 below), wherein in a dismounted position said protrusion 13 disengages from said hole 14 provided in said oscillating arm 7, allowing said connecting device 6 to be released from said oscillating arm 3. As shown, said protrusion 13 is hingeable along two lateral hinges 15 located near an outer edge of said second part 9 and on opposite sides of said oscillating arm 7, upon activating a push button 16 on said second part 9 by hand in the direction of arrow 17. More in particular, a part 18 of the top wall of the second part 9 is hingeable about said hinges 15, wherein the push button 16 is located at a top side of said part 18 near one end thereof, and wherein said protrusion 13 is located at a bottom side of said part 18 near an opposite end thereof. By activating or deactivating the push button 16, a hinge movement in the direction of arrows 19 is obtained. Said movement is a so-called seesaw movement. Said hinges 15 are invisible from the outside when the first and second parts 8,9 are interconnected.

The protrusion 13 on said second part 9 and the hole 14 in the oscillating arm 7 are meant for retaining the connecting device 6 onto the oscillating arm 7 and are therefore called "first retaining means". However, in case the first retaining means would disfunction, for example when the protrusion 13 would not properly fit into the hole 14, the second part 9 and the first part 8 connected thereto would be able to move relative to the oscillating arm 7 in longitudinal direction of the wiper blade 2. In order to avoid the wiper blade 2 from coming loose, with all negative consequences involved, second retaining means are provided for. Said second retaining means consist of an upwardly extending protrusion 20 on at least one of said parallel, upright walls 21 of said first part 8 cooperating with a recess 22 in the oscillating arm 7 (figure 1). In other words, said protrusion 20 engages into said correspondingly shaped recess 22 provided on a longitudinal (exterior) side 23 of the oscillating arm 7. Said protrusion 20 may also be called a cam.

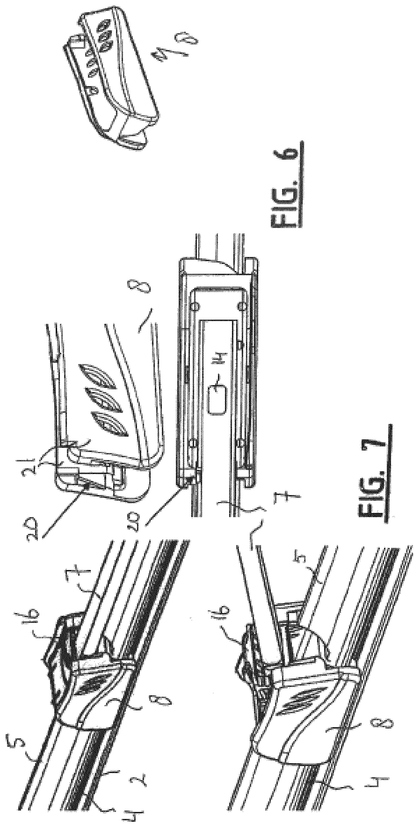

For mounting or dismounting the connecting device 6 onto or from the oscillating arm 7, the second part 9 and thus the free end of the oscillating arm 7 connected thereto is pivoted relative to the first part 8 (figure 7). While carrying out the pivot movement the protrusion or cam 20 is no longer in line with the recess 22 and cannot mutually cooperate any longer, so that the second part 9 and the first part 8 attached thereto can be released from the oscillating arm 7. This can, of course, only be done when also the protrusion 13 in all embodiments is released from the hole 14.

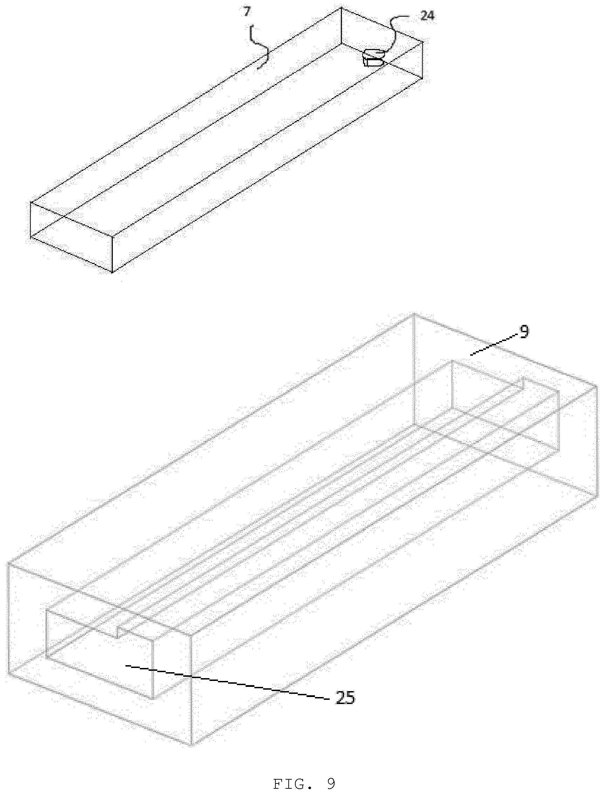

In a vehicle provided with at least two windscreen wiper devices of the flat blade type (one at the driver's side and the other at the passenger's side) an asymmetric form of said second part 9 and of said extension of said oscillating arm 7 with respect to their middle longitudinal planes, seen in vertical direction, is obtained. Reference is made to figure 9. Indeed, said extension is provided with a protuberance 24 extending upwardly from a top surface of said extension and said channel is provided with a correspondingly shaped groove 25. Due to this asymetric form of both the second part 9 and its corresponding oscillating arm 7 it ensured that each windscreen wiper device 1 can only be mounted on its corresponding oscillating arm 7. Hence, it is prevented that the windscreen wiper device 1 meant for the oscillating arm 7 at the passenger side of the automobile can be mounted on the oscillating arm 7 at the drivers side of the automobile, and that the windscreen wiper device 1 meant for the oscillating arm 7 at the drivers side of the automobile can be mounted on the oscillating arm at the passengers side of the automobile.

The invention is not restricted to the variants shown in the drawing, but it also extends to other embodiments that fall within the scope of the appended claims.

## Claims

1. A vehicle provided with at least two windscreen wiper devices (1) of the flat blade type each comprising an elastic, elongated carrier element, as well as an elongated wiper blade (2) of a flexible material, which can be placed in abutment with a windscreen of the vehicle to be wiped, each wiper blade (2) including at least one groove (3), in which groove (3) a longitudinal strip (4) of the carrier element is disposed, which windscreen wiper devices (1) each comprise a connecting device (6) for a respective oscillating arm (7), wherein each oscillating arm (7) is pivotally connected to its corresponding connecting device (6) about a pivot axis near one end, and wherein each connecting device (6) comprises at least two parts (8, 9) provided with protrusion/hole means arranged for detachably connecting said parts (8, 9) together through a snapping operation, wherein the first part (8) is retained onto its corresponding wiper blade (2) and wherein the second part (9) comprises a channel arranged for inserting a rod-like extension of its corresponding oscillating arm (7) therein, **characterized in that** each second part (9) and said extension of its corresponding oscillating arm (7) comprise mutually cooperating protuberance/groove means resulting in an asymmetric form of said second part (9) and of said extension of said oscillating arm (7) with respect to their middle longitudinal planes, seen in vertical direction, in order to ensure that each windscreen wiper device (1) can only be mounted on its corresponding oscillating arm (7).

2. A vehicle according to claim 1, wherein said extension is provided with a protuberance (24) cooperating with a groove (25) of said channel.

3. A vehicle according to claim 1 or 2, wherein said channel and said extension each have a rectangular cross-section.

4. A vehicle according to claim 2 and 3, wherein said protuberance (24) extends upwardly from an upper surface of said extension, and wherein said groove (25) extends in an upper wall of said channel.

5. A vehicle according to any of the preceding claims 1 through 4, wherein each windscreen wiper device (1) is provided with retaining means arranged for retaining said connecting device (6) onto said extension of its corresponding oscillating arm (7), wherein said retaining means comprises at least one downwardly extending protrusion (13) on the second part (9), wherein said protrusion (13) is movable between an inward position, wherein in mounted position said protrusion (13) engages into a correspondingly shaped hole (14) provided in said extension of said oscillating arm (7) and said connecting device (6) is retained onto said oscillating arm (7), and an outward position, wherein in dismounted position said protrusion (13) disengages from said hole (14) provided in said extension of said oscillating arm (7) and said connecting device (6) is released from said oscillating arm (7).

6. A vehicle according to claim 5, wherein upon activating a push button (16) on said second part (9) said protrusion (13) is hingeable from said inward position and said outward position along hinges (15) of said second part (9) located on opposite sides of said extension of said oscillating arm (7) in mounted position thereof.

7. A vehicle according to claim 5 or 6, wherein said retaining means form first retaining means, and wherein each windscreen wiper device (1) further comprises second retaining means arranged for retaining said connecting device (6) onto said extension of its corresponding oscillating arm (7), wherein said second retaining means comprises at least one protrusion provided on the first part (8) arranged to engage into a recess provided along a longitudinal side of the extension of the oscillating arm (7).

8. A windscreen wiper device (1) as defined in a vehicle according to any of the preceding claims 1 through 7.

9. An oscillating arm (7) as defined in a vehicle according to any of the preceding claims 1 through 7, comprising a rod-like extension provided with a protuberance (24) extending upwardly from an upper surface of said extension, wherein said rod-like extension has an asymmetric form with respect to its middle longitudinal plane due to the arrangement of the protuberance (24).

## Patentansprüche

1. Fahrzeug, bereitgestellt mit wenigstens zwei Scheibenwischervorrichtungen (1) des Flachblatttyps, wobei jede ein elastisches, längliches Trägerelement sowie ein längliches Wischerblatt (2) aus einem biegsamen Material umfasst, das anliegend an eine zu wischenden Scheibe des Fahrzeugs platziert werden kann, wobei jedes Wischerblatt (2) wenigstens eine Nut (3) einschließt, wobei in der Nut (3) ein Längsstreifen (4) des Trägerelements angeordnet ist, wobei jede der Scheibenwischervorrichtungen (1) eine Verbindungsvorrichtung (6) für einen jeweiligen sich hin und her bewegenden Arm (7) umfasst, wobei jeder sich hin und her bewegende Arm (7) schwenkbar verbunden ist mit seiner entsprechenden Verbindungsvorrichtung (6) um eine Schwenkachse nahe eines Endes, und wobei jede Verbindungsvorrichtung (6) wenigstens zwei Teile (8, 9) umfasst, bereitgestellt mit Vorsprung/Lochmitteln, die angeordnet sind zum lösbaren Zusammenverbinden der Teile (8, 9) durch einen Schnappvorgang, wobei der erste Teil (9) gesichert ist auf seinem entsprechenden Wischerblatt (2) und wobei der zweite Teil (9) einen Kanal umfasst, der angeordnet ist zum darin Einbringen einer stabförmigen Verlängerung von seinem entsprechenden sich hin und her bewegenden Arm (7), **gekennzeichnet dadurch, dass** jeder zweite Teil (9) und die Verlängerung von seinem entsprechenden sich hin und her bewegenden Arm (7) gegenseitig zusammenarbeitende Vorsprung/Nutmittel umfassen, die resultieren in einer asymmetrischen Form des zweiten Teils (9) und der Verlängerung des sich hin und her bewegenden Arms (7) hinsichtlich ihrer mittleren Längsebenen, gesehen in vertikaler Richtung, um zu gewährleisten, dass jede Scheibenwischervorrichtung (1) nur auf seinem entsprechenden sich hin und her bewegenden Arm (7) befestigt werden kann.

2. Fahrzeug nach Anspruch 1, wobei die Verlängerung bereitgestellt ist mit einem Höcker (24), der mit einer Nut (25) des Kanals zusammenwirkt.

3. Fahrzeug nach Anspruch 1 oder 2, wobei der Kanal und die Verlängerung beide einen rechteckigen Querschnitt aufweisen.

4. Fahrzeug nach Anspruch 2 und 3, wobei sich der Höcker (24) nach oben von einer oberen Oberfläche der Verlängerung erstreckt, und wobei sich die Nut (25) in einer oberen Wand des Kanals erstreckt.

5. Fahrzeug nach einem der vorhergehenden Ansprüche 1 bis 4, wobei jede Scheibenwischervorrichtung (1) bereitgestellt ist mit Sicherungsmitteln, die angeordnet sind zum Sichern der Verbindungsvorrichtung (6) auf der Verlängerung von seinem entsprechenden sich hin und her bewegenden Arm (7), wobei die Sicherungsmittel wenigstens einen sich nach unten erstreckenden Vorsprung (13) auf dem zweiten Teil (9) umfassen, wobei der Vorsprung (13) zwischen einer einwärtigen Position beweglich ist, wobei in befestigter Position der Vorsprung (13) in ein entsprechend geformtes Loch (14) eingreift, bereitgestellt in der Verlängerung des sich hin und her bewegenden Arms (7) und die Verbindungsvorrichtung (6) auf dem sich hin und her bewegenden Arm (7) gesichert ist, und einer auswärtigen Position, wobei sich in unbefestigter Position der Vorsprung (13) von dem Loch (14) loslöst, bereitgestellt in der Verlängerung des sich hin und her bewegenden Arms (7) und die Verbindungsvorrichtung (6) von dem sich hin und her bewegenden Arm (7) freigegeben ist.

6. Fahrzeug nach Anspruch 5, wobei beim Aktivieren eines Druckknopfes (16) auf dem zweiten Teil (9) der Vorsprung (13) schwenkbar ist von der einwärtigen Position und der auswärtigen Position entlang Gelenken (15) des zweiten Teils (9), angeordnet auf gegenüberliegenden Seiten der Verlängerung des sich hin und her bewegenden Arms (7) in befestigter Position davon.

7. Fahrzeug nach Anspruch 5 oder 6, wobei die Sicherungsmittel erste Sicherungsmittel bilden, und wobei jede Scheibenwischervorrichtung (1) ferner zweite Sicherungsmittel umfasst, angeordnet zum Sichern der Verbindungsvorrichtung (6) auf der Verlängerung von seinem entsprechenden sich hin und her bewegenden Arm (7), wobei die zweiten Sicherungsmittel wenigstens einen Vorsprung umfassen, der auf dem ersten Teil (8) bereitgestellt ist, angeordnet, um in eine Aussparung einzugreifen, die entlang einer Längsseite der Verlängerung des sich hin und her bewegenden Arms (7) bereitgestellt ist.

8. Scheibenwischervorrichtung (1) wie in einem Fahrzeug nach einem der vorhergehenden Ansprüche 1 bis 7 definiert.

9. Sich hin und her bewegender Arm (7) wie in einem Fahrzeug nach einem der vorhergehenden Ansprüche 1 bis 7 definiert, umfassend eine stabförmige Verlängerung, die mit einem Höcker (24) bereitgestellt ist, der sich nach oben von einer oberen Oberfläche der Verlängerung erstreckt, wobei die stabförmige Verlängerung eine asymmetrische Form aufweist hinsichtlich ihrer mittleren Längsebene aufgrund der Anordnung des Höckers (24).

## Revendications

1. Véhicule prévu avec au moins deux dispositifs d'essuie-glace (1) du type à balai plat comprenant un élément de support allongé élastique, ainsi qu'un balai d'essuie-glace allongé (2) réalisé avec un matériau flexible, qui peut être placé en butée contre un pare-brise du véhicule à essuyer, chaque balai d'essuie-glace (2) comprenant au moins une rainure (3), dans laquelle rainure (3), est disposée une bande longitudinale (4) de l'élément de support, lesquels dispositifs d'essuie-glace (1) comprennent chacun un dispositif de raccordement (6) pour un bras oscillant (7) respectif, dans lequel chaque bras oscillant (7) est raccordé de manière pivotante à son dispositif de raccordement (6) correspondant autour d'un axe de pivot à proximité d'une extrémité, et dans lequel chaque dispositif de raccordement (6) comprend au moins deux parties (8, 9) prévues avec un moyen de saillie / trou agencé pour raccorder, de manière détachable, lesdites parties (8, 9) ensemble par une opération d'encliquetage, dans lequel la première partie (8) est retenue sur son balai d'essuie-glace (2) correspondant, et dans lequel la seconde partie (9) comprend un canal agencé pour insérer une extension en forme de tige de son bras oscillant (7) correspondant, **caractérisé en ce que** chaque seconde partie (9) et ladite extension de son bras oscillant (7) correspondant comprennent un moyen de protubérance / rainure mutuellement coopératif se traduisant par une forme asymétrique de ladite seconde partie (9) et de ladite extension dudit bras oscillant (7) par rapport à leurs plans longitudinaux centraux, observés dans la direction verticale, afin de garantir que chaque dispositif d'essuie-glace (1) ne peut être monté que sur son bras oscillant (7) correspondant.

2. Véhicule selon la revendication 1, dans lequel ladite extension est prévue avec une protubérance (24) coopérant avec une rainure (25) dudit canal.

3. Véhicule selon la revendication 1 ou 2, dans lequel ledit canal et ladite extension ont chacun une section transversale rectangulaire.

4. Véhicule selon les revendications 2 et 3, dans lequel ladite protubérance (24) s'étend vers le haut à partir d'une surface supérieure de ladite extension, et dans lequel ladite rainure (25) s'étend dans une paroi supérieure dudit canal.

5. Véhicule selon l'une quelconque des revendications 1 à 4, dans lequel chaque dispositif d'essuie-glace (1) est prévu avec un moyen de retenue agencé pour retenir ledit dispositif de raccordement (6) sur ladite extension de son bras oscillant (7) correspondant, dans lequel ledit moyen de retenue comprend au moins une saillie (13) s'étendant vers le bas sur la seconde partie (9), dans lequel ladite saillie (13) est mobile entre une position vers l'intérieur, dans lequel, dans la position montée, ladite saillie (13) se met en prise dans un trou de forme correspondante (14) prévu dans ladite extension dudit bras oscillant (7) et ledit dispositif de raccordement (6) est retenu sur ledit bras oscillant (7), et une position extérieure, dans lequel dans la position démontée, ladite saillie (13) se dégage dudit trou (14) prévu dans ladite extension dudit bras oscillant (7) et ledit dispositif de raccordement (6) est libéré dudit bras oscillant (7).

6. Véhicule selon la revendication 5, dans lequel suite à l'activation d'un bouton-poussoir (16) sur ladite seconde partie (9), ladite saillie (13) peut être articulée à partir de ladite position vers l'intérieur et ladite position vers l'extérieur le long des charnières (15) de ladite seconde partie (9) positionnées sur les côtés opposés de ladite extension dudit bras oscillant (7) dans sa position montée.

7. Véhicule selon la revendication 5 ou 6, dans lequel ledit moyen de retenue forme un premier moyen de retenue, et dans lequel chaque dispositif d'essuie-glace (1) comprend en outre un second moyen de retenue agencé pour retenir ledit dispositif de raccordement (6) sur ladite extension de son bras oscillant (7) correspondant, dans lequel ledit second moyen de retenue comprend au moins une saillie prévue sur la première partie (8) agencée pour se mettre en prise dans un évidement prévu le long d'un côté longitudinal de l'extension du bras oscillant (7).

8. Dispositif d'essuie-glace (1) tel que défini dans un véhicule selon l'une quelconque des revendications 1 à 7.

9. Bras oscillant (7) tel que défini dans un véhicule selon l'une quelconque des revendications 1 à 7, comprenant une extension en forme de tige prévue avec une protubérance (24) s'étendant vers le haut à partir d'une surface supérieure de ladite extension, dans lequel ladite extension en forme de tige a une forme asymétrique par rapport à son plan longitudinal central en raison de l'agencement de la protubérance (24).
